# EUROPEAN PATENT APPLICATION

(11) **EP 3 199 606 A1**
(43) Date of publication of application: **02.08.2017**
(21) Application number: 15822688.6
(22) Date of filing: 07.07.2015
(51) Int. Cl.: C09J 11/06, C09J 11/08, C09J 195/00

(54) **CROSS-LINKED WATERPROOF SEALANT, PRODUCTION METHOD THEREOF, AND APPLICATION THEREOF**

(30) Priority: 12.07.2014 CN 201410329990
(71) Applicant: Guangxi Golden Umbrella Waterproofing Co. Ltd., Nanning, Guangxi 530001 (CN)
(72) Inventor: LU, Guicai, Nanning, Guangxi 530001 (CN); ZHU, Fangwu, Nanning, Guangxi 530001 (CN); WU, Shengjiang, Nanning, Guangxi 530001 (CN); GUO, Wenxiong, Nanning, Guangxi 530001 (CN); CHEN, Libin, Nanning, Guangxi 530001 (CN); ZHAO, Xiaolan, Nanning, Guangxi 530001 (CN)
(74) Representative: Patentanwälte Bauer Vorberg Kayser
(86) International application number: PCT/CN2015/083499
(87) International publication number: WO 2016/008373

(57) **Abstract**

Provided are a bridged waterproof sealant paste, a production method thereof, and an application thereof. The bridged waterproof sealant comprises synthetic rubber latex, emulsified asphalt, and a bridging agent. One end of the bridging agent is combined with the C=C double-bond, carboxyl group (-COOH), and hydroxyl group (-OH) of the asphalt, and the other end is combined with the hydroxyl or acid radical generated after cement hydration, forming a chemical bridging and physical fitting joint synergistic bonding effect; the sealant is tightly joined with cement or concrete to form an integral body; during the process of solidification of the cement, the waterproof sealant can creep into and permeate the pores of the cement gel and concrete, thus achieving an adhesive effect of tight, firm, and irreversible bonding.

## Description

### CROSS REFERENCE TO RELATED APPLICATIONS

This application is a national phase of International Application No. PCT/CN2015/083499, filed on July 7, 2015, which is based upon and claims priority to Chinese Patent Application No. 2014103299903, filed on July 12, 2014, the entire contents of which are incorporated herein by reference.

### Field of the Invention

The invention relates to the technical field of building materials, and particularly to a waterproof sealant paste, a production method thereof, and an application thereof.

### Background of the Invention

At present, the linear expansion coefficient of a PPR or PVC water supply-drainage pipe which penetrates through a floor of a kitchen/bath of a building is greatly different from that of a concrete floor, that is, the linear expansion coefficient of concrete at normal temperature is 1*10⁻⁵ / °C, however, that of the PPR or PVC pipe is (6-7)*10⁻⁵ / °C, and after several seasonal cold-hot freezing and thawing cycles, cracks can be easily caused at connecting parts between the water supply-drainage pipe and the concrete floor, therefore, when water supply-drainage pipelines in kitchens/baths are constructed, or the PPR or PVC water supply-drainage pipes penetrate through the floor are constructed, sealing waterproof treatment is needed. Existing sealing waterproof treatment technologies include the following ways:
In modified asphalt sealing treatment, modified asphalt is hot melted at appropriate temperature and is subsequently cast, this process is complex to operate in construction, and temperature control and coating process are very significant. Firstly, the temperature for hot melting the asphalt shall be precisely controlled, if the temperature is too high and the asphalt mobility is too high, the asphalt cannot be bonded with the PPR or PVC pipe, then sealing cannot be achieved, and moreover the asphalt can be easily damaged when the temperature is higher than 100 °C; if the temperature is too low, the requirement on the bonding property of the asphalt with the PPR or PVC pipe, and concrete cannot be met. Secondly, great caution is required for skills in the construction, the asphalt shall be very uniformly smeared and often needs to be smeared for multiple times repeatedly since the effect of the modified asphalt being bonded with the PPR or PVC pipe and with the concrete is not ideal enough and needs to be made up for by virtue of the construction skill.

In asphalt mixture sealant paste treatment, pure asphalt, fiber and a solvent are mixed to prepare a sealant paste, the sealant paste has a property of being in a viscous liquid state at normal temperature and can be directly used for coating and sealing a connecting part between cement and a pipeline, for example, a roof leakage repairing product of the brand 208^{®}-WetPatch™ of US Henry Company. While in this type of sealant paste, an organic solvent with low volatility is used as the solvent, so that the drying time is long, the sealant paste generally needs more than two weeks to be dried, and moreover, in the situation that a base surface is wet, the sealant paste cannot be bonded with the base surface, and thus construction cannot be implemented; in addition, as the sealant paste comprises the asphalt and fiber as main components, after being dried, a sealing layer has no elasticity, is relatively poor in strength and is not long-lasting or durable enough.

A polyurethane sealant paste, which uses polyurethane as a main component, can be directly used at normal temperature, while has the shortcomings that the effect of being bonded with the PPR or PVC pipe and the concrete is not ideal enough and construction cannot be implemented if the base surface is wet.

A silicone sealant, which uses materials such as sodium silicate, organic silicon and polymers of silicone structure as main components, has a relatively good effect of being bonded with the PPR or PVC pipe and the concrete, but is poor in stability, is short in service life under sunlight exposure or in a wet state, easy to peel off and also relatively poor in strength, and construction requirements cannot be met.

A polyacrylic resin sealant paste, which uses polyacrylic resin as a main component, is relatively complex in preparation process, and needs to be modified with high requirements so as to prepare water-based polyacrylic resin and then an emulsion. The polyacrylic resin sealant paste can be used on wet base surfaces for construction, but is relatively poor in effect of being bonded with the PPR or PVC pipe and the concrete.

In conclusion, the sealing treatment technique for construction of PPR or PVC water supply-drainage pipes penetrating the floor in the prior art still has many drawbacks, and a novel waterproof sealing product which is simple in preparation process, convenient for construction, good in sealing and waterproof property, high in strength and long-lasting and durable is urgently needed.

### Summary of the Invention

The present invention aims to provide a waterproof sealant paste, a production method thereof, and an application thereof, and the waterproof sealant paste is simple in preparation process, convenient in construction, good in sealing and waterproof property, high in strength and long-lasting and durable.

The bridged waterproof sealant paste is prepared from raw materials comprising the following raw materials in parts by weight:

| | |
|---|---|
| synthetic rubber latex | 1-90; |
| emulsified asphalt | 10-90; |
| bridging agent | 0.1-5; |
| thickening agent | 0.1-3; |

The total solid content of mixture of the synthetic rubber latex and the emulsified asphalt is 20%-80%.

The bridging agent comprises one or a mixture of more than one of a silane bridging agent, a bi-metal bridging agent, a lignin bridging agent, a tin bridging agent, a zirconium bridging agent, a phosphate bridging agent and a rare earth bridging agent.

Rubber used in the building waterproof field generally exists in the form of a mixture, so that the above rubber latex can be mixed and applied in any ratio.

Petroleum asphalt used in the building waterproof field generally exists in the form of a mixture, so that sorts of the above petroleum asphalt emulsion can be mixed and applied in any ratio.

The mechanism of reactions between the bridging agents and concrete is identical, and moreover, the bridging agents have similar chemical properties, therefore, the bridging agents can be mixed and applied in any ratio.

The synthetic rubber latex is one or a mixture of butadiene styrene rubber latex, chloroprene rubber latex, SBS rubber latex and polyacrylate type.

The emulsified asphalt is cationic emulsified asphalt, nonionic emulsified asphalt or anionic emulsified asphalt.

The cationic emulsified asphalt comprises emulsified asphalt prepared from cationic emulsifiers such as alkyl polyamine, amine oxide, quaternary ammonium salt, amidoamine, imidazoline and lignan.

The nonionic emulsified asphalt comprises emulsified asphalt prepared from nonionic emulsifiers such as emulsions with ether groups, ester groups, amides and heterocycle.

The anionic emulsified asphalt comprises emulsified asphalt prepared from anionic emulsifiers such as carboxylate type, sulfonate type and sulfate type.

The emulsified asphalt is one or a mixture of more than one of SBS modified emulsified asphalt, SBR styrene-butadiene rubber modified emulsified asphalt, APP atactic polypropylene modified emulsified asphalt, IIR butyl rubber modified emulsified asphalt or CR chloroprene rubber modified emulsified asphalt, BR cis-butadiene rubber modified emulsified asphalt, IR isoprene rubber modified emulsified asphalt, SIS styrene-isoprene-styrene block copolymer modified emulsified asphalt, SEBB modified emulsified asphalt, SEBS modified emulsified asphalt, NR natural rubber modified emulsified asphalt, SIR silicone rubber modified emulsified asphalt and NBR nitrile butadiene rubber modified emulsified asphalt.

The thickening agent is one or a mixture of more than one of cellulose ether and a derivative of the cellulose ether, an alkali swelling type thickening agent, a polyurethane thickening agent, a hydrophobic modified non-polyurethane thickening agent, an inorganic thickening agent, a complex organic metal compound type thickening agent, polyacrylamide, sodium polyacrylate, sodium carboxymethylcellulose and sodium alginate.

The cellulose ether and the derivative of the cellulose ether comprise hydroxyethyl cellulose, methyl hydroxyethyl cellulose, ethyl hydroxyethyl cellulose, methyl hydroxy propyl cellulose, methylcellulose, hydrophobic modified cellulose, xanthan gum and guar gum.

The alkali swelling type thickening agent comprises a non-associated type polyacrylate alkali swelling type emulsion and an associated type polyacrylate alkali swelling type emulsion.

The polyurethane thickening agent and the hydrophobic modified non-polyurethane thickening agent comprise an anionic associated type polyurethane thickening agent, a cationic associated type polyurethane thickening agent, a non-ionic associated type polyurethane thickening agent, a hydrophobic modified amino thickening agent, a hydrophobic modified polyether thickening agent and a hydrophobic modified polyurea thickening agent.

The inorganic thickening agent comprises bentonite, attapulgite and fumed silica.

The silane waterproof bridging agent is any one or a mixture of alkenyl siloxane, amino siloxane, chlorine hydrocarbyl siloxane, methacryloxy siloxane and epoxy siloxane.

The bimetal bridging agent comprises an aluminum zirconium bridging agent and an aluminum titanium bridging agent.

The lignin bridging agent comprises sodium lignosulphonate and calcium lignosulphonate.

The tin bridging agent comprises stannic chloride.

The zirconium bridging agent comprises a dodecylbenzene sulfonic acid zirconium complex, a neodecanoic acid zirconium complex, an isooctanol hydrogen phosphate zirconium complex, a 2-[(2-amino ethyl) amino] ethanol zirconium complex, neodecanoic acid zirconium complex.

The phosphate bridging agent comprises methacryloyloxyethyl phosphate, ethyleneglycol methacrylate phosphate, alkyl acrylate phosphate and polyfunctionality acid acrylic ester.

The rare earth bridging agent comprises a rare earth aluminic acid ester bridging agent and a rare earth titanate bridging agent.

The alkenyl siloxane is vinyl trichlorosilane, vinyl trimethoxy silane, vinyl triethoxy silane, vinyl tri(β-methoxyl ethoxyl) silane, vinyl triacetoxyl silane, tert butoxy vinyl silane, vinyl tri-tert-butyl peroxy-silane, allyl trimethoxy silane or allyl triethoxy silane.

The amino siloxane is anilino methyl trimethoxy silane, anilino methyltriethoxy silane, N-(4-amino butyl) amino methyl triethoxy silane, γ-amino propyl trimethoxy silane, (3-amino propyl) triethoxy silane, N-methyl-3-aminopropyl trimethoxy silane, N-phenyl-3-amino propyl trimethoxy silane, γ-(β-aminoethyl) aminopropyl trimethoxy silane, γ-(β-aminoethyl) aminopropyl methyl dimethoxy silane, γ-divinyl triamino propyl trimethoxy silane, 3-aminophenyl trimethoxy silane, 2-(4-N-benzyl ethidene diamine) ethyl trimethoxy silane or N,N-di(2-ethoxyl)-3-aminopropyl triethyoxyl silane.

The chlorine hydrocarbyl siloxane is γ-chloropropyl trichlorosilane, γ-chloropropyl trimethoxy silane, γ-chloropropyl triethyoxyl silane or 2-(4-chlorobenzyl) ethyl trimethoxy silane.

The methacryloxy siloxane is γ-methacryloxy propyltrichloro-silane, γ-methacryloxy propyl trimethoxy silane, γ- methacryloxy propyl tri (β-methoxyl ethyoxyl) silane or γ- methylacryloxy propyl tri(trimethyl siloxane) silane.

The epoxy siloxane is 3-(2,3 epoxy propoxyl) propyl trimethoxy silane, β-(3,4 epoxy cyclohexyl) ethyl trimethoxy silane, β-(3,4 epoxy cyclohexyl) ethyl triethoxy silane or β-(3,4 epoxy cyclohexyl) ethyl methyl diethyoxyl silane.

The rare earth titanate bridging agent comprises isopropyl dioleic (dioctyl pyrophosphosphate) titanate, isopropyl tri(dioctyl phosphosphate) titanate, mono-alkoxy unsaturated fatty acid titanate, chelate of bis(P,P-bis-ethylhexyl diphosphato) ethanediolato titanate and triethanolamine, bis(P,P-bis-ethylhexyl diphosphato) ethanediolato titanate, vegetable acid mono-alkoxy titanate, titanium tris(dodecyl benzene sulfonate) isopropoxide, isopropyl tri(di-octyl phosphosphate) titanate, tetra-isopropyl di-(di-octyl phosphite) titanate, isopropyl tri-(dioctyl pyrophosphoric acid) titanate, isopropyl tri (decanoyl) titanate, isopropyl tri(N-β-aminoethyl-β-aminoethyl) titanate, isopropyl tri[N-β-(aminoethyl) methyl-aminoethyl] titanate, isopropyl trioleyl titanate.

The production method of the bridging waterproof sealant paste comprises the following steps: filling the synthetic rubber latex, the emulsified asphalt and the bridging agents into a kettle, stirring well at normal temperature, adding the thickening agents into the kettle, and mixing and stirring well.

The bridging agent is added into the formula system of the invention, the component plays a significant role in improving the bonding strength of the sealant paste with the concrete, and this is one of the key techniques of the invention. The inventor makes a great amount of screening experiments to determine components of the bridging agent. Principles thereof are as follows: as the concrete is prepared by blending and curing stone and cement, calcium silicate hydrate (C-S-H-gel), calcium hydroxide and oxygen-bearing inorganic compounds with a great amount of active Si-OH groups on surface and with negative electricity are generated after cement hydration. One end of the structure of the bridging agent can be connected with unsaturated carbon bonds, the carboxyl and the hydroxyl in the waterproof sealant paste, forming relatively good chemical affinity; the other end of the silane can generate hydrated chemical bonds in the concrete into which water and the cement have been added, the bridging agents have chemical cross-linking and physical fitting joint synergistic bonding with concrete, and then the asphalt and the cement are tightly linked integrally, chemical bonds play a role in related parts so that the bonding is irreversible after being solidified, so the components can be used to prepare waterproof sealant paste , the waterproof sealant paste is outstanding in oil resistance and flexibility resistance, is non-toxic, safe and environment-friendly and non-pollution and can creep into pores of the cement gel and the concrete in the solidification process of the cement and the concrete, thus achieving an interlinked adhesive effect of tight, firm, and irreversible bonding. A waterproof layer is very hard to take away or peel off.

Due to adoption of the bridging agent which can have reactions with the sealant paste and the concrete simultaneously, compared with a traditional product, the prepared waterproof sealant paste is relatively higher in concrete bonding strength and anti-peeling strength.

A great amount of the thickening agent is used in the formula system of the invention, and the use of the thickening agent is mainly aimed at increasing the viscosity of an emulsified asphalt and rubber waterproof sealant paste system, so that the emulsified asphalt and rubber waterproof sealant paste can be used at pipe roots and upright walls without phenomenon such as sliding off or sagging, and good sealing of connecting parts between PPR or PVC water supply-drainage pipes and concrete floors is achieved.

### Detailed Description of the Embodiments

**Embodiment 1**

| | |
|---|---|
| Synthetic rubber latex | 90 kg; |
| Emulsified asphalt | 10 kg; |
| Bridging agent | 1.5 kg; |
| Thickening agent | 0.1 kg. |

The synthetic rubber latex is butadiene styrene rubber latex.

The emulsified asphalt is butyl rubber modified emulsified asphalt of which the solid content is 65%.

The bridging agent is vinyl trimethoxy silane.

The thickening agent is cellulose ether and a derivative of the cellulose ether, specifically, a mixture of methyl hydroxyethyl cellulose and ethyl hydroxyethyl cellulose.

The total solid content of the mixture of synthetic rubber latex and emulsified asphalt is 60%.

Steps include: filling the synthetic rubber latex, the emulsified asphalt and the bridging agent into the kettle, stirring well at normal temperature, then adding the thickening agent into the kettle, and mixing and stirring well.

**Embodiment 2**

| | |
|---|---|
| Synthetic rubber latex | 1 kg; |
| Emulsified asphalt | 90 kg; |
| Bridging agent | 1.2 kg; |
| Thickening agent | 3 kg. |

The synthetic rubber latex is SBS rubber latex.

The emulsified asphalt is styrene-butadiene rubber modified emulsified asphalt of which the solid content is 60%.

The bridging agent is tri-tert-butoxy vinyl silane.

The thickening agent is an alkali swelling type thickening agent, specifically, an associated polyacrylate alkali swelling type emulsion.

The total solid content of the mixture of synthetic rubber latex and emulsified asphalt is 50%.

Steps include: filling the synthetic rubber latex, the emulsified asphalt and the bridging agent into the kettle, stirring well at normal temperature, then adding the thickening agent into the kettle, and mixing and stirring well.

**Embodiment 3**

| | |
|---|---|
| Synthetic rubber latex | 37 kg; |
| Emulsified asphalt | 63 kg; |
| Bridging agent | 1.1 kg; |
| Thickening agent | 0.8 kg. |

The synthetic rubber latex is chloroprene rubber latex.

The emulsified asphalt is styrene-butadiene rubber modified emulsified asphalt of which the solid content is 50%.

The bridging agent is a mixture of allyl trimethoxy silane and γ-amino propyl trimethoxy silane which are respectively 0.55 kg.

The thickening agent is a polyurethane thickening agent and a hydrophobic modified non-polyurethane thickening agent, specifically, a mixture of a non-ionic associated polyurethane thickening agent and a hydrophobic modified amino thickening agent.

The total solid content of the mixture of synthetic rubber latex and emulsified asphalt is 55%.

Steps include: filling the synthetic rubber latex, the emulsified asphalt and the bridging agent into the kettle, stirring well at normal temperature, then adding the thickening agent into the kettle, and mixing and stirring well.

**Embodiment 4**

| | |
|---|---|
| Synthetic rubber latex | 72 kg; |
| Emulsified asphalt | 28 kg; |
| Bridging agent | 1.5 kg; |
| Thickening agent | 0.6 kg. |

The synthetic rubber latex is a mixture of butadiene styrene rubber latex and chloroprene rubber latex.

The emulsified asphalt is a mixture of styrene-butadiene rubber modified emulsified asphalt and SBS modified emulsified asphalt of which the solid content is 55% .

The bridging agent is allyl triethoxy silane.

The thickening agent is cellulose ether and a derivative of the cellulose ether, specifically, hydroxyethyl cellulose

The total solid content of the mixture of synthetic rubber latex and emulsified asphalt is 40%.

Steps include: filling the synthetic rubber latex, the emulsified asphalt and the bridging agent into the kettle, stirring well at normal temperature, then adding the thickening agent into the kettle, and mixing and stirring well.

**Embodiment 5**

| | |
|---|---|
| Synthetic rubber latex | 44 kg; |
| Emulsified asphalt | 56 kg; |
| Bridging agent | 0.1 kg; |
| Thickening agent | 0.8 kg. |

The synthetic rubber latex is polyacrylate latex.

The emulsified asphalt is styrene-butadiene rubber modified emulsified asphalt of which the solid content is 43%.

The bridging agent is allyl trichlorosilane.

The thickening agent is cellulose ether and a derivative of the cellulose ether, specifically, a mixture of ethyl hydroxyethyl cellulose and guar gum.

The total solid content of the mixture of synthetic rubber latex and emulsified asphalt is 50%.

Steps include: filling the synthetic rubber latex, the emulsified asphalt and the bridging agent into the kettle, stirring well at normal temperature, then adding the thickening agent into the kettle, and mixing and stirring well.

**Embodiment 6**

| | |
|---|---|
| Synthetic rubber latex | 50 kg; |
| Emulsified asphalt | 50 kg; |
| Bridging agent | 3 kg; |
| Thickening agent | 3 kg. |

The synthetic rubber latex is a mixture of butadiene styrene rubber and SBS rubber latex.

The emulsified asphalt is chloroprene rubber modified asphalt latex of which the solid content is 61 %.

The bridging agent is a mixture of vinyl trimethoxy silane, vinyl tris(β-methoxyl ethyoxyl) silane, vinyl trichlorosilane, vinyl triethyoxyl silane.

The thickening agent is an alkali swelling type thickening agent, specifically, a mixture of a non-associated polyacrylate alkali swelling type emulsion and an associated polyacrylate alkali swelling type emulsion.

The total solid content of the mixture of synthetic rubber latex and emulsified asphalt is 60%.

Steps include: filling the synthetic rubber latex, the emulsified asphalt and the bridging agent into the kettle, stirring well at normal temperature, then adding the thickening agent into the kettle, and mixing and stirring well.

**Embodiment 7**

| | |
|---|---|
| Synthetic rubber latex | 53 kg; |
| Emulsified asphalt | 50 kg; |
| Bridging agent | 1.8 kg; |
| Thickening agent | 0.4 kg. |

The synthetic rubber latex is polyacrylate latex.

The emulsified asphalt is SBS rubber modified emulsified asphalt of which the solid content is 53%.

The bridging agent is a mixture of vinyl tris(β-methoxyl ethyoxyl) silane, vinyl trichlorosilane, γ-chloropropyl trimethoxy silane, vinyl triacetoxyl silane, tri-t-butoxyl vinyl silane.

The thickening agent is a polyurethane thickening agent, specifically, a non-ionic associated polyurethane thickening agent and a hydrophobic modified amino thickening agent.

The total solid content of the mixture of synthetic rubber latex and emulsified asphalt is 70%.

Steps include: filling the synthetic rubber latex, the emulsified asphalt and the bridging agent into the kettle, stirring well at normal temperature, then adding the thickening agent into the kettle, and mixing and stirring well.

**Embodiment 8**

| | |
|---|---|
| Synthetic rubber latex | 1 kg; |
| Emulsified asphalt | 10 kg; |
| Bridging agent | 5 kg; |
| Thickening agent | 3 kg. |

The synthetic rubber latex is a mixture of chloroprene rubber latex and SBR rubber latex.

The emulsified asphalt is styrene-butadiene rubber modified emulsified asphalt of which the solid content is 59%.

The bridging agent is β-(3,4 epoxy cyclohexyl) ethyl trimethoxy silane.

The thickening agent is a hydrophobic modified polyether thickening agent.

The total solid content of the mixture of synthetic rubber latex and emulsified asphalt is 80%.

Steps include: filling the synthetic rubber latex, the emulsified asphalt and the bridging agent into the kettle, stirring well at normal temperature, then adding the thickening agent into the kettle, and mixing and stirring well.

**Embodiment 9**

| | |
|---|---|
| Synthetic rubber latex | 15 kg; |
| Emulsified asphalt | 85 kg; |
| Bridging agent | 1.7 kg; |
| Thickening agent | 0.3 kg. |

The synthetic rubber latex is a mixture of SBS rubber latex and polyacrylate latex.

The emulsified asphalt is chloroprene rubber modified emulsified asphalt of which the solid content is 51%.

The bridging agent is a mixture of vinyl triacetoxyl silane, tri-tert-butoxyl vinyl silane, vinyl tri-tertiary butyl peroxide silane, allyl trimethoxy silane, allyl triethoxy silane and allyl trichlorosilane.

The thickening agent is a complex organic metal compound type thickening agent.

The total solid content of the mixture of synthetic rubber latex and emulsified asphalt is 30%.

Steps include: filling the synthetic rubber latex, the emulsified asphalt and the bridging agent into the kettle, stirring well at normal temperature, then adding the thickening agent into the kettle, and mixing and stirring well.

**Embodiment 10**

| | |
|---|---|
| Synthetic rubber latex | 90 kg; |
| Emulsified asphalt | 90 kg; |
| Bridging agent | 1.2 kg; |
| Thickening agent | 0.6 kg. |

The synthetic rubber latex is butadiene styrene rubber latex.

The emulsified asphalt is SBS modified emulsified asphalt of which the solid content is 63%.

The bridging agent is a mixture of vinyl trichlorosilane and N-phenyl-3-amino propyl trimethoxy silane which are respectively 0.6 kg.

The thickening agent is sodium polyacrylate.

The total solid content of the mixture of synthetic rubber latex and emulsified asphalt is 65%.

Steps include: filling the synthetic rubber latex, the emulsified asphalt and the bridging agent into the kettle, stirring well at normal temperature, then adding the thickening agent into the kettle, and mixing and stirring well.

| | |
|---|---|
| Embodiment 11 | |
| Synthetic rubber latex | 90 kg; |
| Emulsified asphalt | 10 kg; |
| Bridging agent | 1 kg; |
| Thickening agent | 0.5 kg. |

The synthetic rubber latex is polyacrylate rubber latex.

The emulsified asphalt is styrene-butadiene rubber modified emulsified asphalt of which the solid content is 70%.

The bridging agent is aluminum zirconium bridging agent.

The thickening agent is cellulose ether and a derivative of the cellulose ether, specifically, a mixture of ethyl hydroxyethyl cellulose and methyl hydroxypropyl cellulose.

The total solid content of the mixture of synthetic rubber latex and emulsified asphalt is 80%.

Steps include: filling the synthetic rubber latex, the emulsified asphalt and the bridging agent into the kettle, stirring well at normal temperature, then adding the thickening agent into the kettle, and mixing and stirring well.

**Embodiment 12**

| | |
|---|---|
| Synthetic rubber latex | 0.1 kg; |
| Emulsified asphalt | 90 kg; |
| Bridging agent | 0.3 kg; |
| Thickening agent | 3 kg. |

The synthetic rubber latex is butadiene styrene rubber latex.

The emulsified asphalt is SBS modified emulsified asphalt of which the solid content is 40%.

The bridging agent is sodium lignosulphonate.

The thickening agent is an alkali swelling type thickening agent, specifically, a non-associated polyacrylate alkali swelling type emulsion.

The total solid content of the mixture of synthetic rubber latex and emulsified asphalt is 20%.

Steps include: filling the synthetic rubber latex, the emulsified asphalt and the bridging agent into the kettle, stirring well at normal temperature, then adding the thickening agent into the kettle, and mixing and stirring well.

**Embodiment 13**

| | |
|---|---|
| Synthetic rubber latex | 40 kg; |
| Emulsified asphalt | 60 kg; |
| Bridging agent | 2 kg; |
| Thickening agent | 1.6 kg. |

The synthetic rubber latex is SBS rubber latex.

The emulsified asphalt is chloroprene rubber modified emulsified asphalt of which the solid content is 50%.

The bridging agent is an aluminum titanium bridging agent:
The thickening agent is a mixture of a polyurethane thickening agent and a hydrophobic modified non-polyurethane thickening agent, specifically, a mixture of a cationic associated polyurethane thickening agent and a hydrophobic modified polyether thickening agent.

The total solid content of the mixture of synthetic rubber latex and emulsified asphalt is 30%.

Steps include: filling the synthetic rubber latex, the emulsified asphalt and the bridging agent into the kettle, stirring well at normal temperature, then adding the thickening agent into the kettle, and mixing and stirring well.

**Embodiment 14**

| | |
|---|---|
| Synthetic rubber latex | 60 kg; |
| Emulsified asphalt | 40 kg; |
| Bridging agent | 1 kg; |
| Thickening agent | 0.1 kg. |

The synthetic rubber latex is a mixture of butadiene styrene rubber latex and chloroprene rubber latex.

The emulsified asphalt is a mixture of styrene-butadiene rubber modified emulsified asphalt and SBS modified emulsified asphalt of which the solid content is 60% .

The bridging agent is a rare earth aluminic acid ester bridging agent.

The thickening agent is cellulose ether and a derivative of the cellulose ether, specifically hydroxyethyl cellulose.

The total solid content of the mixture of synthetic rubber latex and emulsified asphalt is 40%.

Steps include: filling the synthetic rubber latex, the emulsified asphalt and the bridging agent into the kettle, stirring well at normal temperature, then adding the thickening agent into the kettle, and mixing and stirring well.

**Embodiment 15**

| | |
|---|---|
| Synthetic rubber latex | 40 kg; |
| Emulsified asphalt | 60 kg; |
| Bridging agent | 0.1 kg; |
| Thickening agent | 3 kg. |

The synthetic rubber latex is a mixture of SBS rubber latex and polyacrylate latex.

The emulsified asphalt is APP modified emulsified asphalt of which the solid content is 47%.

The bridging agent is a mixture of a rare earth titanate bridging agent, calcium lignosulphonate and an aluminum titanium bridging agent.

The thickening agent is cellulose ether and a derivative of the cellulose ether, and specifically a mixture of ethyl hydroxyethyl cellulose and guar gum.

The total solid content of the mixture of synthetic rubber latex and emulsified asphalt is 50%.

Steps include: filling the synthetic rubber latex, the emulsified asphalt and the bridging agent into the kettle, stirring well at normal temperature, then adding the thickening agent into the kettle, and mixing and stirring well.

**Embodiment 16**

| | |
|---|---|
| Synthetic rubber latex | 50 kg; |
| Emulsified asphalt | 50 kg; |
| Bridging agent | 3 kg; |
| Thickening agent | 3 kg. |

The synthetic rubber latex is SBS rubber latex.

The emulsified asphalt is butyl rubber modified asphalt latex of which the solid content is 62%.

The bridging agent is tin tetrachloride.

The thickening agent is an alkali swelling type thickening agent, specifically, a mixture of a non-associated polyacrylate alkali swelling type emulsion and an associated polyacrylate alkali swelling type emulsion.

The total solid content of the mixture of synthetic rubber latex and emulsified asphalt is 60%.

Steps include: filling the synthetic rubber latex, the emulsified asphalt and the bridging agent into the kettle, stirring well at normal temperature, then adding the thickening agent into the kettle, and mixing and stirring well.

**Embodiment 17**

| | |
|---|---|
| Synthetic rubber latex | 5 kg; |
| Emulsified asphalt | 50 kg; |
| Bridging agent | 0.8 kg; |
| Thickening agent | 0.9 kg. |

The synthetic rubber latex is polyacrylate latex.

The emulsified asphalt is SBR modified emulsified asphalt of which the solid content is 43%.

The bridging agent is a mixture of methacryloyloxyethyl phosphate, 2-hydroxyethyl methacrylate phosphate , tin tetrachloride and calcium lignosulphonate.

The thickening agent is a polyurethane thickening agent, specifically a non-ionic associated polyurethane thickening agent or a hydrophobic modified amino thickening agent.

The total solid content of the mixture of synthetic rubber latex and emulsified asphalt is 70%.

Steps include: filling the synthetic rubber latex, the emulsified asphalt and the bridging agent into the kettle, stirring well at normal temperature, then adding the thickening agent into the kettle, and mixing and stirring well.

**Embodiment 18**

| | |
|---|---|
| Synthetic rubber latex | 0.1 kg; |
| Emulsified asphalt | 10 kg; |
| Bridging agent | 5 kg; |
| Thickening agent | 3 kg. |

The synthetic rubber latex is a mixture of chloroprene rubber latex and SBS rubber latex.

The emulsified asphalt is APP modified emulsified asphalt of which the solid content is 53%.

The bridging agent is tin tetrachloride.

The thickening agent is a hydrophobic modified polyether thickening agent.

The total solid content of the mixture of synthetic rubber latex and emulsified asphalt is 80%.

Steps include: filling the synthetic rubber latex, the emulsified asphalt and the bridging agent into the kettle, stirring well at normal temperature, then adding the thickening agent into the kettle, and mixing and stirring well.

**Embodiment 19**

| | |
|---|---|
| Synthetic rubber latex | 42 kg; |
| Emulsified asphalt | 58 kg; |
| Bridging agent | 2.4 kg; |
| Thickening agent | 1.2 kg. |

The synthetic rubber latex is a mixture of SBS rubber latex and polyacrylate latex.

The emulsified asphalt is chloroprene rubber modified emulsified asphalt of which the solid content is 69%.

The bridging agent is a mixture of an aluminum zirconium bridging agent, a rare earth aluminic acid ester bridging agent and methacryloyloxyethyl phosphate.

The thickening agent is a complex organic metal compound type thickening agent.

The total solid content of the mixture of synthetic rubber latex and emulsified asphalt is 30%.

Steps include: filling the synthetic rubber latex, the emulsified asphalt and the bridging agent into the kettle, stirring well at normal temperature, then adding the thickening agent into the kettle, and mixing and stirring well.

**Embodiment 20**

| | |
|---|---|
| Synthetic rubber latex | 90 kg; |
| Emulsified asphalt | 90 kg; |
| Bridging agent | 2.3 kg; |
| Thickening agent | 0.6 kg. |

The synthetic rubber latex is butadiene styrene rubber latex.

The emulsified asphalt is SBS modified emulsified asphalt of which the solid content is 61%.

The bridging agent is a rare earth aluminic acid ester bridging agent.

The thickening agent is sodium polyacrylate.

The total solid content of the mixture of synthetic rubber latex and emulsified asphalt is 65%.

Steps include: filling the synthetic rubber latex, the emulsified asphalt and the bridging agent into the kettle, stirring well at normal temperature, then adding the thickening agent into the kettle, and mixing and stirring well.

**Embodiment 21**

| | |
|---|---|
| Synthetic rubber latex | 66 kg; |
| Emulsified asphalt | 34 kg; |
| Bridging agent | 1.7 kg; |
| Thickening agent | 1.6 kg. |

The synthetic rubber latex is butadiene styrene rubber latex.

The emulsified asphalt is SBS modified emulsified asphalt of which the solid content is 61%.

The bridging agent is a mixture of a rare earth titanate bridging agent, 2-hydroxyethyl methacrylate phosphate, [2,2-bis[(2-propen-1-yloxy-kO)methyl]-1-butanolato-kO]tris(neodecanoato-kO), Zirconium and sodium lignosulphonate.

The thickening agent is fumed silica.

The total solid content of the mixture of synthetic rubber latex and emulsified asphalt is 75%.

Steps include: filling the synthetic rubber latex, the emulsified asphalt and the bridging agent into the kettle, stirring well at normal temperature, then adding the thickening agent into the kettle, and mixing and stirring well.

### Embodiment 22

According to the present invention, the bridging agent with two different chemical active groups is introduced, wherein one of the groups can have chemical cross-linking reaction with a cement base surface, the other group can be combined with the asphalt and the rubber so as to form a dense spatial network structure, ultimately, due to synergism of physical fitting joint and chemical cross-linking, the waterproof material can be tightly combined with the cement or concrete base surface so as to form a unified whole, the shortcoming that a traditional binary structure is not solidly bonded and is easily peeled off from the base surface under conditions of coldness and hotness alternation and dry-wet circulation can be effectively avoided, and the waterproof property of the waterproof material is remarkably improved. Meanwhile, the waterproof sealant paste of the invention is water-based, and thus can be used on wet base surfaces for construction and is convenient and rapid to use.

As the product can have both physical fitting joint and chemical cross-linking action with the base surface, the excellent effect of being bonded with the base surface is the innovative point of the product performance. See comparison test results in table 1:

**Table 1**

| Project | Construcition conditions | Bonding strength with concrete base surface / MPa | Elongation at breakage /% | Practicability |
|---|---|---|---|---|
| Embodiment 1 | Can be used in humid environments for construction, the base surface does not need to be clean | 2.2-2.5 | 1289-1360 | Low in cost, free of volatile organic solvent, good in bonding with smooth surface articles such as a plastic tube and a metal pipeline, and wide in application. |
| Embodiment 3 | Can be used in humid environments for construction, the base surface does not need to be clean | 1.6-1.8 | 879-985 | Low in cost, free of volatile organic solvent, good in bonding with smooth surface articles such as a plastic tube and a metal pipeline, and wide in application. |
| Embodiment 4 | Can be used in humid environments for construction, the base surface does not need to be clean | 1.75-1.90 | 896-987 | Low in cost, free of volatile organic solvent, good in bonding with smooth surface articles such as a plastic tube and a metal pipeline, and wide in application. |
| Embodiment 5 | Can be used in humid environments for construction, the base surface does not need to be clean | 1.45-1.65 | 778-928 | Low in cost, free of volatile organic solvent, good in bonding with smooth surface articles such as a plastic tube and a metal pipeline, and wide in application. |
| Embodiment 6 | Can be used in humid environments for construction, the base surface does not need to be clean | 1.5-1.7 | 830-910 | Low in cost, free of volatile organic solvent, good in bonding with smooth surface articles such as a plastic tube and a metal pipeline, and wide in application. |
| Embodiment 8 | Can be used in humid environments for construction, the base surface does not need to be clean | 0.85-1.15 | 530-610 | Low in cost, free of volatile organic solvent, good in bonding with smooth surface articles such as a plastic tube and a metal pipeline, and wide in application. |
| Embodiment 9 | Can be used in humid environments for construction, the base surface does not need to be clean | 1.55-1.70 | 796-866 | Low in cost, free of volatile organic solvent, good in bonding with smooth surface articles such as a plastic tube and a metal pipeline, and wide in application. |
| Polyurethane sealant paste | The base surface must be dry and clean | 0.7-1.0 | 200-300 | Moderate in cost, added with volatile cancerogenic substance as production raw material, poor in bonding with smooth surface articles such as a plastic tube and a metal pipeline, and easy to peel off. |
| 208®-Wet Patch™ of US Henry Company | The base surface must be dry and clean | 0.5-0.7 | 10-30 | Moderate in cost, added with volatile organic solvent, poor in bonding with smooth surface articles such as a plastic tube and a metal pipeline, easy to peel off, without toughness and long in forming time of bonding. |
| Silicone sealant | Can be used in humid environments for construction, the base surface does not need to be clean | 0.6-0.7 | 120-150 | High in cost, poor in bonding with smooth surface articles such as a plastic tube and a metal pipeline and easy to peel off, and a base surface can be corroded by organic acid generated in the curing process. |

### Embodiment 23

See specific waterproof parameter comparison results obtained after a part of the bridging agents is added into the sealant paste system in table 2.

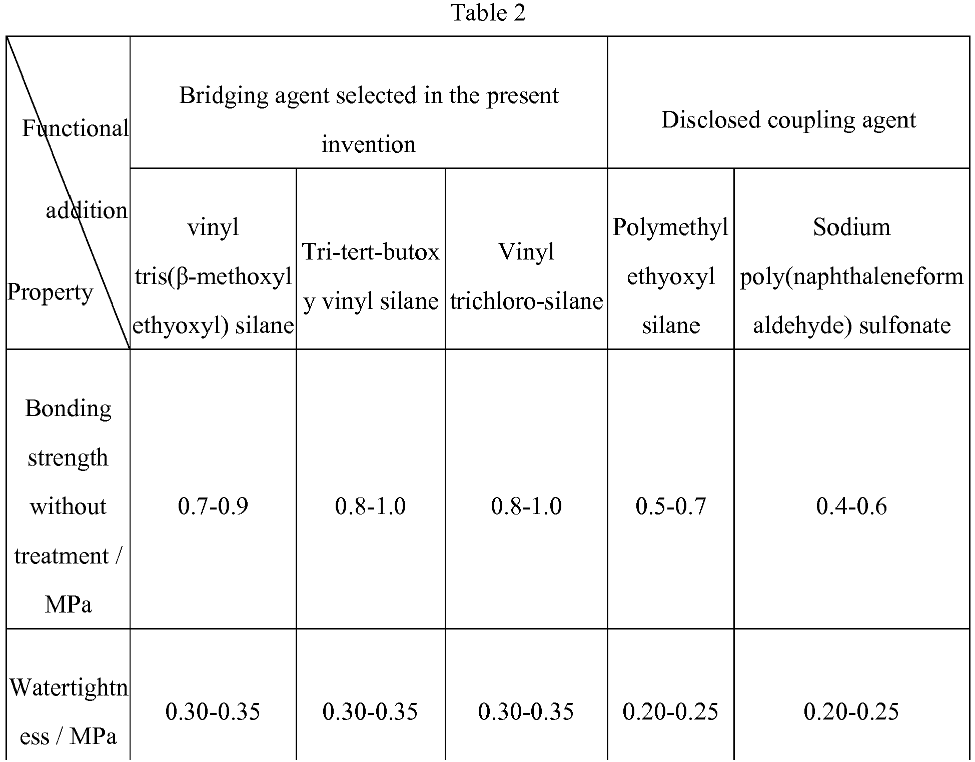

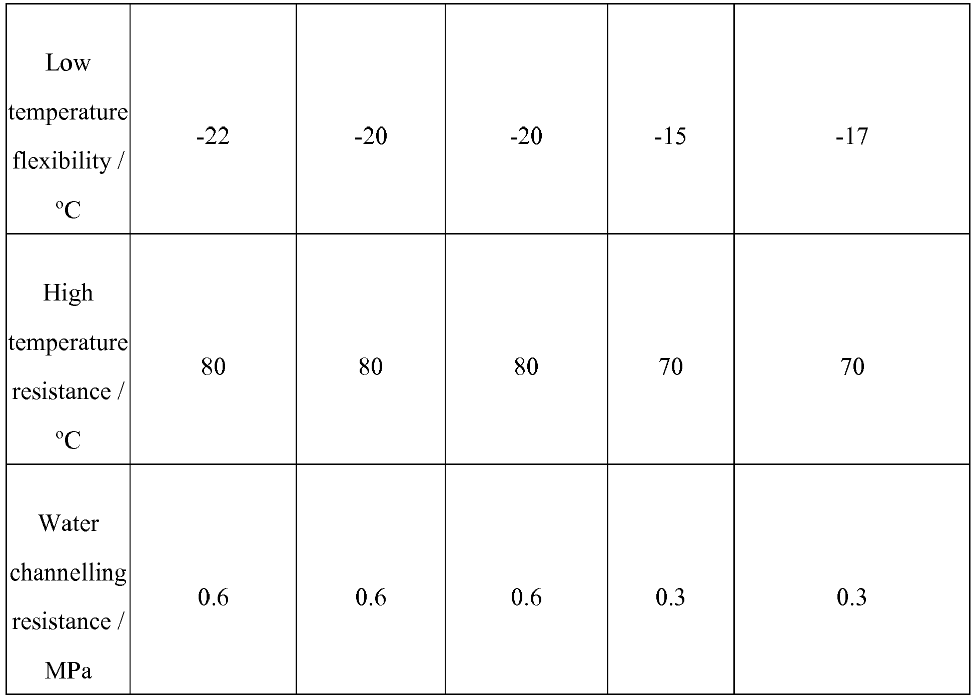

On premise of equivalent addition amounts, the result that the bonding strength of the sealant paste between the material and the cement base surface is generally consistent shows that the added bridging agents also have same effects in bonding property, but the watertightness, the low temperature property and the water channeling resistance are improved, particularly, the sealant paste is more outstanding in low temperature flexibility and water channelling resistance. Experiments show that the water resistance durability of the sealant paste can be improved by adding of the novel bridging agents. As the formed sealant paste can turn into a solid and elastic sealing layer by adding of the novel functional auxiliaries, entering or permeation of water molecules can be effectively prevented, and due to the hydrophobic property, the sealant paste is more excellent in watertightness and water channelling resistance.

### Embodiment 24

See specific waterproof parameter comparison results obtained after a part of the bridging agents is added into the sealant paste system in table 3.

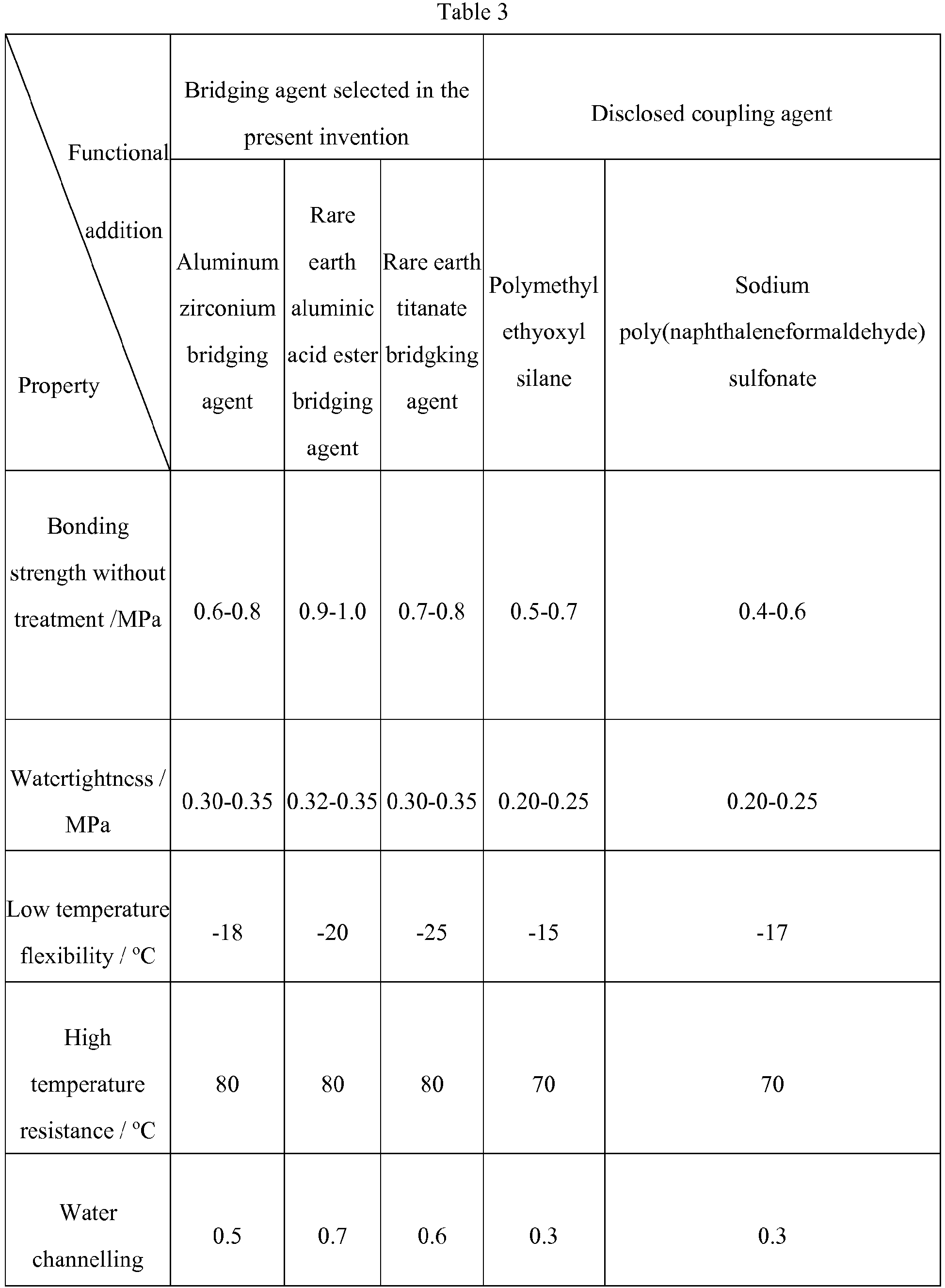

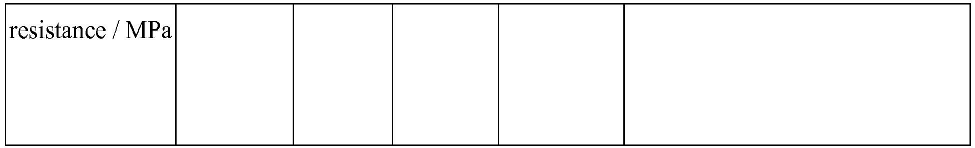

On premise of equivalent addition amounts, the result that the bonding strength of the sealant paste between the material and the cement base surface is generally consistent shows that the added bridging agents also have same effects in bonding property, but the watertightness, the low temperature property and the water channelling resistance are improved, particularly, the sealant paste is more outstanding in low temperature flexibility and water channelling resistance. Experiments show that the water resistance durability of the sealant paste can be improved by adding of the novel bridging agents. As the formed sealant paste can turn into a solid and elastic sealing layer by adding of the novel functional auxiliaries, entering or permeation of water molecules can be effectively prevented, and due to the hydrophobic property, the sealant paste is more excellent in watertightness and water moving resistance.

## Claims

1. A bridged waterproof sealant paste, being prepared from raw materials comprising the following raw materials in parts by weight:
| | |
|---|---|
| synthetic rubber latex | 1-90; |
| emulsified asphalt | 10-90; |
| bridging agent | 0.1-5; |
| thickening agent | 0.1-3. |

2. The bridged waterproof sealant paste according to claim 1, wherein the total solid content of mixture of the synthetic rubber latex and the emulsified asphalt is 20%-80%.

3. The bridged waterproof sealant paste according to claim 1, wherein bridging agent comprises one or a mixture of more than one of a silane bridging agent, a bi-metal bridging agent, a lignin bridging agent, a tin bridging agent, a zirconium bridging agent, a phosphate bridging agent and a rare earth bridging agent.

4. The bridged waterproof sealant paste according to claim 1, wherein the synthetic rubber latex is any one or a mixture of butadiene styrene rubber latex, chloroprene rubber latex, SBS rubber latex and polyacrylate type.

5. The bridged waterproof sealant paste according to claim 1, wherein the emulsified asphalt is cationic emulsified asphalt, nonionic emulsified asphalt or anionic emulsified asphalt;
the cationic emulsified asphalt comprises emulsified asphalt prepared from cationic emulsifiers such as alkyl polyamine, amine oxide, quaternary ammonium salt, amidoamine, imidazoline and lignan;
the nonionic emulsified asphalt comprises emulsified asphalt prepared from nonionic emulsifiers such as ether group emulsions, ester group emulsions, amide emulsions, heterocycle emulsions;
the anionic emulsified asphalt comprises emulsified asphalt prepared from anionic emulsifiers such as carboxylate type, sulfonate type and sulfate type.

6. The bridged waterproof sealant paste according to claim 1, wherein the emulsified asphalt is one or a mixture of more than one of SBS modified emulsified asphalt, SBR styrene butadiene rubber modified emulsified asphalt, APP atactic polypropylene modified emulsified asphalt, IIR butyl rubber modified emulsified asphalt or CR chloroprene rubber modified emulsified asphalt, BR cis-butadiene rubber modified emulsified asphalt, IR isoprene rubber modified emulsified asphalt, SIS styrene-isoprene-styrene block copolymer modified emulsified asphalt, SEBB modified emulsified asphalt, SEBS modified emulsified asphalt, NR natural rubber modified emulsified asphalt, SIR silicone rubber modified emulsified asphalt and NBR nitrile butadiene rubber modified emulsified asphalt.

7. The bridged waterproof sealant paste according to claim 1, wherein the thickening agent is one or a mixture of more than one of cellulose ether and a derivative of the cellulose ether, an alkali swelling type thickening agent, a polyurethane thickening agent, a hydrophobic modified non-polyurethane thickening agent, an inorganic thickening agent, a complex organic metal compound type thickening agent, polyacrylamide, sodium polyacrylate, sodium carboxymethylcellulose and sodium alginate.

8. The bridged waterproof sealant paste according to claim 7, wherein the cellulose ether and the derivative of the cellulose ether comprise hydroxyethyl cellulose, methyl hydroxyethyl cellulose, ethyl hydroxyethyl cellulose, methyl hydroxy propyl cellulose, methylcellulose, hydrophobic modified cellulose, xanthan gum and guar gum.

9. The bridged waterproof sealant paste according to claim 7, wherein the alkali swelling type thickening agent comprises a non-associated polyacrylate alkali swelling type emulsion and an associated polyacrylate alkali swelling type emulsion.

10. The bridged waterproof sealant paste according to claim 7, wherein the polyurethane thickening agent and the hydrophobic modified non-polyurethane thickening agent comprise an anionic associated type polyurethane thickening agent, a cationic associated type polyurethane thickening agent, a non-ionic associated type polyurethane thickening agent, a hydrophobic modified amino thickening agent, a hydrophobic modified polyether thickening agent and a hydrophobic modified polyurea thickening agent.

11. The bridged waterproof sealant paste according to claim 7, wherein the inorganic thickening agent comprises bentonite, attapulgite and fumed silica.

12. The bridged waterproof sealant paste according to claim 1, wherein the silane type waterproof bridging agent is any one of alkenyl siloxane, amino siloxane, chlorine hydrocarbyl siloxane, methacryloxy siloxane and epoxy siloxane or composition thereof;
the bimetal bridging agent comprises an aluminum zirconium bridging agent and an aluminum titanium bridging agent;
the lignin bridging agent comprises sodium lignosulphonate and calcium lignosulphonate;
the tin bridging agent comprises stannic chloride;
the zirconium bridging agent comprises a dodecylbenzene sulfonic acid zirconium complex, a neodecanoic acid zirconium complex, an isooctanol hydrogen phosphate zirconium complex, a 2-[(2-amino ethyl) amino] ethanol zirconium complex, neodecanoic acid zirconium complex;
the phosphate bridging agent comprises methacryloyloxyethyl phosphate, ethyleneglycol methacrylate phosphate, alkyl acrylate phosphate and polyfunctionality acid acrylic ester:
the rare earth bridging agent comprises a rare earth aluminic acid ester bridging agent and a rare earth titanate bridging agent.

13. The bridged waterproof sealant paste according to claim 11, wherein the alkenyl siloxane is vinyl trichlorosilane, vinyl trimethoxy silane, vinyl triethoxy silane, vinyl tri(β-methoxyl ethoxyl) silane, vinyl triacetoxyl silane, tri-t-butoxyl vinyl silane, vinyl tri-tert-butyl peroxy-silane, allyl trimethoxy silane or allyl triethoxy silane;
the amino siloxane is anilino methyl trimethoxy silane, anilino methyl-triethoxy silane, N-(4-amino butyl) amino methyl triethoxy silane, γ-amino propyl trimethoxy silane, (3-amino propyl) triethoxy silane, N-methyl-3-aminopropyl trimethoxy silane, N-phenyl-3-amino propyl trimethoxy silane, γ-(β-aminoethyl) aminopropyl trimethoxy silane, γ-(β-aminoethyl) aminopropyl methyl dimethoxy silane, γ-divinyl triamino propyl trimethoxy silane, 3-aminophenyl trimethoxy silane, 2-(4-N benzyl ethidene diamine) ethyl trimethoxy silane or N, N-di(2-ethoxyl)-3-aminopropyl triethyoxyl silane.
the chlorine hydrocarbyl siloxane is γ-chloropropyl trichlorosilane, γ-chloropropyl trimethoxy silane, γ-chloropropyl triethyoxyl silane or 2-(4-chlorobenzyl) ethyl trimethoxy silane;
the methacryloxy siloxane is γ-methacryloxy propyltrichloro-silane, γ-methacryloxy propyl trimethoxy silane, γ-methacryloxy propyl tri (β-methoxyl ethyoxyl) silane or γ-methacryloxy propyl tri(trimethyl siloxane) silane;
the epoxy siloxane is 3-(2,3 epoxy propoxyl) propyl trimethoxy silane, β-(3,4 epoxy cyclohexyl) ethyl trimethoxy silane, β-(3,4 epoxy cyclohexyl) ethyl triethoxy silane or β-(3,4 epoxy cyclohexyl) ethyl methyl diethyoxyl silane.

14. The bridged waterproof sealant paste according to claim 11, wherein the rare earth titanate bridging agent comprises isopropyl dioleic (dioctyl pyrophosphosphate) titanate, isopropyl tri(dioctyl phosphosphate) titanate, mono-alkoxy unsaturated fatty acid titanate, chelate of bis(P,P-bis-ethylhexyl diphosphato) ethanediolato titanate and triethanolamine, bis(P,P-bis-ethylhexyl diphosphato) ethanediolato titanate, vegetable acid mono-alkoxy titanate, titanium tris(dodecyl benzene sulfonate) isopropoxide, isopropyl tri(di-octyl phosphosphate) titanate, tetra-isopropyl di-(di-octyl phosphite) titanate, isopropyl tri-(dioctyl pyrophosphoric acid) titanate, isopropyl tri (decanoyl) titanate, isopropyl tri(N-β-aminoethyl-β-aminoethyl) titanate, isopropyl tri[N-β-(aminoethyl) methyl-aminoethyl] titanate, isopropyl trioleyl titanate.

15. The bridged waterproof sealant paste according to claim 1, wherein a production method thereof comprises the following steps: filling the synthetic rubber latex, the emulsified asphalt and the bridging agent into a kettle, stirring well at normal temperature, adding the thickening agent into the kettle, and mixing and stirring well, thereby obtaining a product.
